# EUROPEAN PATENT APPLICATION

(11) **EP 2 369 367 A1**
(43) Date of publication of application: **28.09.2011**
(21) Application number: 10157402.8
(22) Date of filing: 23.03.2010
(51) Int. Cl.: G01S 15/10, G01S 15/02, G01S 7/527, G01F 23/284

(54) **A method for measuring the distance to a near target**

(71) Applicant: Siemens Milltronics Process Instruments Inc., Peterborough, ON K9J 7B1 (CA)
(72) Inventor: Liu, Jing, CA/ Peterborough K9L 0A6 (CA)
(74) Representative: Maier, Daniel Oliver

(57) **Abstract**

A method for measuring the distance to a near target comprises the steps of:
- transmitting, by means of a transducer, a sonic pulse to the target,
- receiving, by means of the transducer, reflected echoes (82, 83, 84, 85) from said target and converting them into an echo profile, and
- selecting one echo (e.g. 82) in the echo profile and determining the distance from the propagation time (T₈₂) of said selected echo (82).

In order to allow for near range measurement by an acoustic pulse-echo ranging system regardless of the blanking distance, the method further comprises the intermediate steps of:
- determining the propagation times (T₈₃) of at least one echo (e.g. 83) following or preceding the selected echo (82),
- determining from the ratio of the propagation times (T₈₂, T₈₃) of the selected echo (82) and the at least one following or preceding echo (83) the number of reflections of the selected echo (82) at the target (7) and
- determining the distance as half the propagation time of said selected echo (82) times the sound velocity and divided by the number of reflections of the selected echo (82).

## Description

The present invention relates to a method for measuring the distance to a near target, said method comprising the steps of:
- transmitting, by means of a transducer, a sonic pulse to the target,
- receiving, by means of the transducer, reflected echoes from said target and converting them into an echo profile, and
- selecting one echo in the echo profile and determining the distance from the propagation time (time-of-flight) of said selected echo.

Pulse-echo ranging systems, also known as time-of-flight ranging systems, are commonly used in level or distance measurement applications and determine the distance to a target (e.g. the reflective surface of a material whose filling level is to be measured) by measuring how long after transmission of an energy pulse or a burst of such pulses the echoes or reflected pulses are received. Such systems typically use ultrasonic pulses or pulsed radar or microwave signals.

Acoustic pulse-echo ranging systems generally include a transducer and a signal processor. The transducer serves the dual role of transmitting the sonic pulses and receiving the reflected echoes. An echo profile is generated from the received echoes. An echo of interest is identified in the echo profile by the signal processor, and the distance or range of the target is calculated based on the propagation time of said echo of interest. A commonly used technique for finding echoes in an echo profile involves generating a time varying threshold (TVT) curve. The TVT curve provides a line on the echo profile which is above the noise level in the echo profile. Valid echoes appear above the TVT curve. For identifying the echo of interest and determining its temporal position on a temporal axis, a variety of known techniques may be used, such as correlation or determining the echo's leading edge, trailing edge, peak or center of mass.

The measurement environment is often cluttered with obstacles which may produce multiple echoes preceding or overlapping the echo from the target. In near range applications, when the target is close to the transducer, there are normally no such obstacles, and the echo from the target is the first one appearing in the echo profile. This echo of interest is followed by multiple echoes with competing strength as a result of sound reflections bouncing back and forth between the transducer and the target.

There is a minimum sensing range or blanking distance in an acoustic pulse-echo ranging system. This blanking distance is a function of the ring down time of the transducer as the transducer must ring down before it can receive an echo. Thus, when the target is getting closer, the first echo, that is the first echo reflected by the target, will fall within the blanking distance, and the second echo will be mistakenly selected for the distance measurement. As a result, the distance reading is doubled. For example, in a level measurement application when the level is rising and getting closer to the ranging system, the reading, on the other hand, reports a drop in level.

It is an object of the present invention to allow for near range measurement by an acoustic pulse-echo ranging system regardless of the blanking distance.

According to the invention this object is achieved in that said method stated at outset further comprises the intermediate steps of:
- determining the propagation time of at least one echo following or preceding the selected echo,
- determining from the ration of the propagation times of the selected echo and the at least one following or preceding echo the number of reflections of the selected echo at the target and
- determining the distance as half the propagation time of said selected echo times the sound velocity and divided by the number of reflections of the selected echo.

Alternatively, the object is achieved by:
- determining the propagation time of at least one echo following or preceding the selected echo, and
- determining the distance as half the difference of the propagation times of said selected echo and the at least one following or preceding echo times the sound velocity.

The selected echo is preferably the first one which has been properly received and identified. However, it may also be the second, third or any further one. From the ratio of the propagation times of the selected echo and the following or, if applicable, preceding echo, it can be determined how often the selected echo has been reflected at the target, which allows for calculating the distance of the target as half the propagation time of said selected echo times the sound velocity and divided by the number of reflections of the selected echo.

The distance may be alternatively determined as half the difference of the propagation times of said selected echo and the at least one following or preceding echo times the sound velocity. This alternative has the advantage that it is free from any zero offset. Thus, the emission time of the sonic pulse does not matter.

In order to make sure that the considered echoes result from multiple reflections between the transducer and the target, more than two subsequent echoes and the pattern of their propagation times may be analyzed whether they follow a pattern of N, N+1, N+2 etc. with N being integer. This can be done by e.g.:
- creating a sequence of the propagation times of the selected echo and at least two following echoes,
- dividing the sequence by its first element and subtracting 1 from each element,
- discarding the first element and inverting the following elements, and
- multiplying each element by the number of its position in the sequence and
- verify whether the elements of the sequence are at least approximately equal.

The number of reflections can then be easily determined by taking the average of the sequence as the number of reflections.

The invention will be now described by way of example and with reference to the accompanying drawing, in which:
Figure 1 shows a block diagram of an acoustic pulse-echo ranging system in a level measurement application;
Figure 2 shows an example of an echo profile obtained when the level is close to the ranging system; and
Figure 3 shows an example of the echo profile obtained when the level rises and comes even closer to the ranging system.

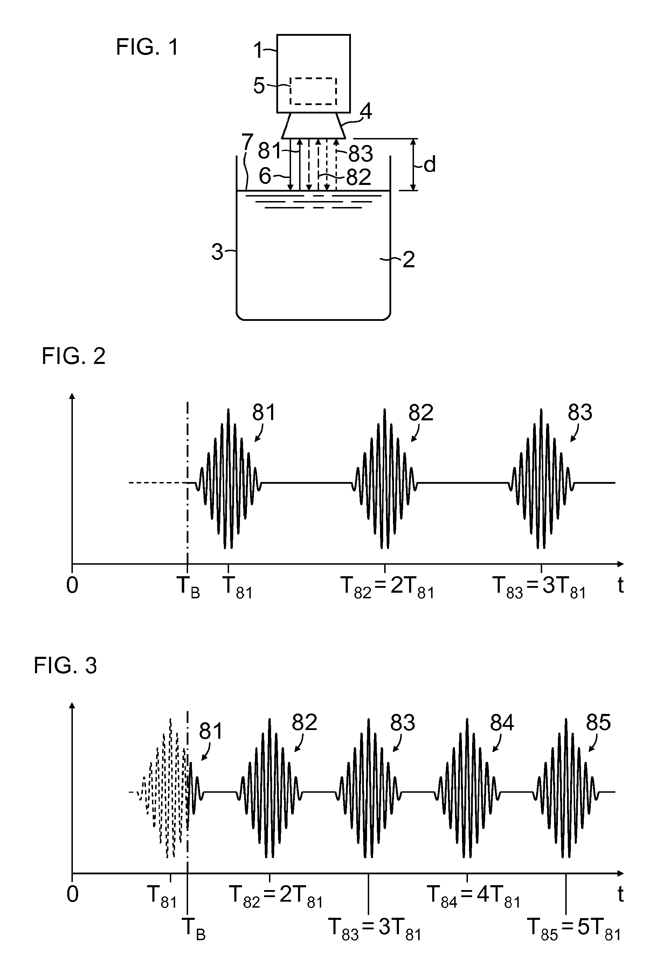

Figure 1 shows a simplified schematic diagram of an acoustic, i.e. sonic or ultrasonic, pulse-echo ranging system 1 which is installed above a medium 2 whose level is to be measured. The medium 2 is held in a tank 3 and may be a liquid or other type of material. The ranging system 1 comprises a transducer 4 which operates under control of a control and evaluation unit 5. The control and evaluation unit 5 excites the transducer 4 to emit ultrasonic pulses 6 at predetermined points in time and with a predetermined frequency and amplitude. The top surface 7 of the medium 2 provides a reflective surface which reflects the ultrasonic pulses 6. The reflected pulses or echoes are received by the transducer 4 and converted into electrical signals which are fed to the control and evaluation unit 5. As a result of multiple reflections bouncing back and forth between the transducer 4 and the reflective surface 7, a first echo 81, which is the echo of interest, is followed by further echoes 82, 83. The control and evaluation unit 5 executes an algorithm which identifies and verifies the echoes 81, 82, 83 and calculates the range of the reflective surface 7, i.e. the time it takes for the echoes 81, 82, 83 to travel from the reflective surface 7 to the transducer 4. From this calculation, the distance d to the surface 7 of the material 2 and thereby the level of the material 2 is determined.

Figure 2 shows an example of an echo profile obtained when the surface 7 of the medium 2 is close to the transducer 4. The echo profile comprises the first echo 81 and the following further echoes 82, 83 along a temporal axis t. The time value 0 designates the time when the pulse 6 is emitted. After the emitted pulse 6, the transducer 4 must ring down before it is able to receive any echo. Therefore, the ranging system 1 waits for a predetermined time T_{B} before it starts listening for an echo. The time T_{B} is known as blanking time or, in terms of distance, blanking distance. In the example of Figure 2, the first echo 81 from the target 7 is outside the blanking time T_{B}. Therefore, the distanced can be simply calculated from the propagation time T₈₁ of the first echo 81 and the sound velocity v (approx. 343 m/s) according to: d = 1/2·v·T₈₁. The echoes 82, 83 from multiple reflections between the transducer 4 and the target 7 follow at intervals of T₈₁ each.

Figure 3 shows an example of the echo profile obtained when the level of the medium 2 rises and comes closer to the transducer 4 so that the first echo 81 falls within the blanking time T_{B} of the transducer 4. Thus, the first echo the system 1 receives or sees is in fact the second echo 82 from the target 7 and has a propagation time 2T₈₁ twice that of the first echo 81. If, now, the first received echo 82 is mistakenly taken as the first echo 81 from the target 7, the reported distance d would be 1/2·v·T₈₂ = v·T₈₁ which is twice the correct distance of 1/2·v·T₈₁.

In order to identify the received echoes 81, 82, ... (Figure 2) or 82, 83, ... (Figure 3) as actually resulting from multiple reflections between the transducer 4 and the target 7 and to determine the number of reflections, the pattern of the propagation times of the echoes is analyzed.

Let in Figure 3 the echo 83 be the selected echo from which the distance of the target 7 shall be determined. Then, the propagation time of this echo 83 is T₈₃ = NT₈₁, where N is the unknown number of reflections and T₈₁ is the also unknown propagation time of the first echo 81. The propagation times of the following echoes 84, 85 are or should ideally be T₈₄ = (N+1)T₈₁, T₈ = (N+2)T₈₁. Thus, the pattern of the propagation times of the echoes 83, 84, 85, ... of interest is [NT₈₁, (N+1)T₈₁, (N+2)T₈₁, ...]. The whole sequence is then divided by the first element NT₈₁ and in a next step subtracted with 1, thus obtaining [0, 1/N, 2/N, ...]. Taking now the inverse of each element except the first one gives [N, N/2, N/3, ...]. In a next step, each element of the sequence is multiplied by the number of its position in the sequence which results in [N, N, N, ...]. Thus, the elements of the sequence being at least approximately equal indicates that the echoes 83, 84, 85, ... result from multiple reflections between the transducer 4 and the target 7. The number N of reflections may be then estimated by taking the average of the sequence. The present example yields N = 3 and d = 1/2·v·T₈₃/3.

It should be noted that throughout the present application the term "sonic" also include "ultrasonic" and that "distance measurement" also include "level measurement".

## Claims

1. A method for measuring the distance (d) to a near target (7), said method comprising the steps of:
- transmitting, by means of a transducer (4), a sonic pulse (6) to the target (7),
- receiving, by means of the transducer (4), reflected echoes (81, 82, 83, 84, 85) from said target (7) and converting them into an echo profile, and
- selecting one echo (e.g. 82) in the echo profile and determining the distance from the propagation time (T₈₂) of said selected echo (82),
**characterized in that** said method further comprises the intermediate steps of:
- determining the propagation time (T₈₃) of at least one echo (e.g. 83) following or preceding the selected echo (82),
- determining from the ratio of the propagation times (T₈₂, T₈₃) of the selected echo (82) and the at least one following or preceding echo (83) the number of reflections of the selected echo (82) at the target (7) and
- determining the distance (d) as half the propagation time (T₈₂) of said selected echo (82) times the sound velocity and divided by the number of reflections of the selected echo (82).

2. A method for measuring the distance (d) to a near target (7), said method comprising the steps of:
- transmitting, by means of a transducer (4), a sonic pulse (6) to the target (7),
- receiving, by means of the transducer (4), reflected echoes (81, 82, 83, 84, 85) from said target (7) and converting them into an echo profile, and
- selecting one echo (e.g. 82) in the echo profile and determining the distance from the propagation time (T₈₂) of said selected echo (82),
**characterized in that** said method further comprises the intermediate steps of:
- determining the propagation time (T₈₃) of at least one echo (e.g. 83) following or preceding the selected echo (82), and
- determining the distance (d) as half the difference of the propagation times (T₈₂, T₈₃) of said selected echo (82) and the at least one following or preceding echo (83) times the sound velocity.

3. The method of claim 1 or 2, **characterized in that** the one echo (82) is selected as the first echo which appears after a blanking time (T_{B}) following the transmitted pulse (6).

4. The method of one of the preceding claims, wherein the step of determining the distance (d) is performed subject to a preceding verification step ensuring that the propagation times (T₈₂, T₈₃, T₈₄) of the selected echo (82) and at least two following and/or preceding echoes (e.g. 83, 84) follow a pattern of N, N+1, N+2 etc. with N being integer.

5. The method of claim 4, wherein the verification step further comprises:
- creating a sequence of the propagation times (T₈₂, T₈₃, T₈₄) of the selected echo (82) and at least two following echoes (83, 84),
- dividing the whole sequence by its first element and subtracting 1 from each element,
- discarding the first element and inverting the following elements,
- multiplying each element by the number of its position in the sequence, and
- verify whether the elements of the sequence are at least approximately equal.

6. The method of claim 5 in connection with claim 1, wherein the step of determining the number of reflections comprises:
- taking the average of the sequence as the number of reflections.
